# EUROPEAN PATENT APPLICATION

(11) **EP 1 289 219 A1**
(43) Date of publication of application: **05.03.2003**
(21) Application number: 01307292.1
(22) Date of filing: 28.08.2001
(51) Int. Cl.: H04L 29/06

(54) **A method of scheduling data packets for transmission over a shared channel, and a terminal of data packet transmission network**

(71) Applicant: LUCENT TECHNOLOGIES INC., Murray Hill, New Jersey 07974-0636 (US)
(72) Inventor: Luschi, Carlo, Oxford (GB); Samuel, Louis Gwyn, Abbey Meads, Swindon (GB)
(74) Representative: Sarup, David Alexander

(57) **Abstract**

A method is provided of scheduling data packets for transmission from a first terminal (2,UE) to a second terminal (UE,2) over a channel shared with other terminals comprising monitoring a time interval from accepting a packet for transmission and scheduling the packet for transmission. If the transmission is unsuccessful, the packet is scheduled for retransmission within a predetermined time. The predetermined time is selected dependent upon the time interval.

## Description

### Technical Field

The present invention relates to a method of scheduling data packets for transmission from a first terminal to a second terminal over a channel shared with other terminals. The present invention also relates to a terminal of a data packet transmission network, the terminal comprising a scheduler operative to schedule data packets for transmission over a channel shared with other terminals.

### Background of the Invention

High-speed packet transmission schemes are currently under development in the evolution of third generation (3G) telecommunication systems. Key factors that enable the high performance of these technologies include higher peak data rates via high order modulation such as 16 or 64 quadrature amplitude modulation, fast scheduling of the users within a common shared channel, and the use of multiple antenna techniques for transmission and reception. Features supporting fast scheduling are Hybrid-Automatic Repeat Request (H-ARQ) i.e. ARQ with Forward Error Correction (FEC) coding, and fast rate selection based on feedback of estimated link quality. Fast rate selection, combined with time domain scheduling on the shared channel, enables advantage to be taken of the short-term variations in the signal received by the mobile terminals, so that each user can be served on a constructing fading, i.e. each user is scheduled for transmission so as to minimise the chance of destructive interference.

In cellular communication systems, the quality of a signal received by a mobile user depends on distances from the serving base station and interfering base stations, path loss (i.e. attenuation), shadowing (signal reduction in the shadow of obstacles), and short-term multipath fading (i.e. scattering). In order to improve the system peak data rates and coverage reliability, link adaptation techniques are used to modify the signal transmitted to and from a particular user to account for variation of the received signal quality. Two link adaptation techniques are Power Control and Adaptive Modulation and Coding (AMC). While the former allocates proportionally more transmitted power to disadvantaged users, with AMC the transmitted power is held constant, and the modulation and coding is changed to match the current channel conditions. In a system implementing AMC, users with favourable channel conditions, e.g. users close to the base station, are typically assigned higher order modulation with higher code rates, which results in higher data rates.

One of the fundamental requirements of high-speed packet networks over wireless channels is the capability of efficiently supporting guaranteed Quality of Service (QoS), meeting the data rate and packet delay constraints of real-time applications like audio/video streaming.

The QoS of a data user can be defined in different ways. For real-time users, the delays of most of the data packets need to be kept below a certain threshold. A different notion of QoS is a requirement that the average throughput provided to a given user is not less than a predetermined value.

The need of efficiently utilize the wireless link capacity implies that a suitable scheduling algorithm should meet the above QoS requirements while optimizing the use of the scarce radio resources. For high-speed packet access, one way of obtaining efficient utilization of the radio link is to exploit the time variations of the shared wireless channel, giving some form of priority to users with better channel conditions. Along this line, the Third Generation Partnership Project (3GPP) High Speed Data Packet Access (HSDPA) scheme contemplates a method of scheduling based on a maximum signal to interference (C/I) ratio rule, where the channel is allocated to the packet flow with the highest supportable rate. However, this approach is not effective in terms of maximum delay guarantee, especially for very low user mobility, which corresponds to nearly stationary channel conditions. In fact, in this case a simple round-robin scheduling can provide better delay performance. On the other hand, a round-robin policy is not effective in terms of throughput.

A solution to the problem of supporting QoS while maximizing throughput is given by throughput optimal scheduling schemes such as the Modified Largest Weighted Delay First (M-LWDF) algorithm described in the paper: M. Andrews, K. Kumaran, K. Ramanan, A. Stolyar, P. Whiting, and R. Vijayakumar, "Providing Quality of Service over a Shared Wireless Link", IEEE Commun. Mag., February 2001. The basic principle of M-LWDF scheduling consists in serving at each time the queue (packet flow) for which the quantity γⱼ τⱼ rⱼ is maximum, where τⱼ denotes the j -th queue head-of-the-line packet delay, rⱼ represents the supportable rate (depending on the channel quality) with respect to the j -th queue, and γⱼ is a positive constant that allows to take into account different delay constraints. However, the actual capability of the scheduling method to provide the required QoS performance critically depends on the definition of the packet access mechanism, including the frame structure, H-ARQ mechanism, and control signalling.

The high-speed downlink packet access technologies discussed above are mainly concerned with best-effort Internet Protocol (IP) data traffic, which is transported by the Transport Control Protocol (TCP). To provide support for the transmission of emerging streaming media traffic, it is necessary to meet the real-time requirements characteristic of these applications. Given the transmission delay requirements of audio and video transmission, the majority of streaming traffic over IP networks uses Real-Time Transport Protocol (RTP)/User Datagram Protocol (UDP) transport, which unlike TCP does not provide a flow or congestion control mechanism. In these cases, a critical problem is given by the transmission delay associated to the presence of a wireless link, which is characterized by a time-varying capacity and variable delays due to link-level H-ARQ retransmissions. Current wireless systems have often to accept a degradation in terms of bit-error rate (for example, bit-error rates in the order of 2% for voice) in order to avoid the delay introduced by the H-ARQ.

### Summary of the Invention

The present invention provides a method of scheduling data packets for transmission from a first terminal to a second terminal over a channel shared with other terminals comprising monitoring the time interval from accepting a packet for transmission, scheduling the packet for transmission and if the transmission is unsuccessful rescheduling the packet for retransmission within a predetermined time, the predetermined time being selected dependent upon the magnitude of the time interval.

Advantages of the present invention in its preferred embodiments are the capability to efficiently provide good quality of service (QoS) over a shared wireless channel, and the capability to efficiently provide errorfree transmission enabling high-provide high-speed transmission of mixed real-time and best-effort traffic on both uplink and downlink.

Preferably the transmission is not considered successful and the time interval for the packet is monitored until a positive acknowledgement from the second terminal is received.

Preferably the larger the measured time interval the sooner the scheduled retransmission.

Preferably the scheduling ensures most or substantially all packets with delay constraint requirements are successfully transmitted within a respective time interval which is within the time duration of one frame. Preferred systems have the advantage of providing good communications (without unacceptable delay), in particular for real-time traffic, such as audio and/or video..

Preferably quality of service (QoS) requirements and/or channel quality are also taken into account in scheduling the transmission and possible retransmission(s).

Preferably the method of scheduling is for downlink packet transmissions, the first terminal being a base station and the second terminal being a user terminal.

Preferably the method of scheduling is for uplink packet transmissions, the first terminal being a user terminal and the second terminal being a base station.

Furthermore, preferably the packet transmissions are performed over a wireless channel, such as a radio channel . Furthermore, preferably the packet transmissions are real-time traffic, best-effort traffic, or a mixture of both.

The present invention also provides a method of scheduling transmissions of data packets in both directions between a base station and a user equipment comprising using the method of scheduling for downlink packet transmissions and the corresponding method of scheduling for uplink packet transmissions.

The present invention also provides a terminal of a data packet transmission network, the terminal comprising a scheduler operative to schedule data packets for transmission over a channel shared with other terminals, the scheduler comprising a timer operative to monitor a time interval from accepting a packet for transmission, the scheduler being operative to schedule the packet for transmission and if the transmission is unsuccessful rescheduling the packet for retransmission within a predetermined time, the predetermined time being selected dependent upon the time interval.

Preferably the terminal is a base station. Preferably the scheduler operates such that the transmission is not considered successful until a positive acknowledgement is received by the base station.

Furthermore, an advantageous feature of a preferred terminal is joint High Speed Packet Access and Hybrid Automatic Repeat reQuest (H-ARQ) scheduling.

Preferably the base station is operative to schedule uplink packet transmissions the scheduling being dependent also on received information of the amount of data packets queued in a user terminal for transmission.

Preferably the terminal is operative to schedule packet transmissions either uplink, downlink, or both uplink and downlink.

### Brief Description of the Drawings

A preferred embodiment of the present invention will now be described by way of example and with reference to the drawings, in which:
Figure 1 is a diagrammatic illustration of a base station and one active mobile station (of many),
Figure 2 is a diagrammatic illustration of High Speed Packet Access scheduling for both uplink and downlink in a base station, and
Figure 3 is a diagrammatic illustration of a High Speed- Shared Channel frame structure.

### Detailed Description

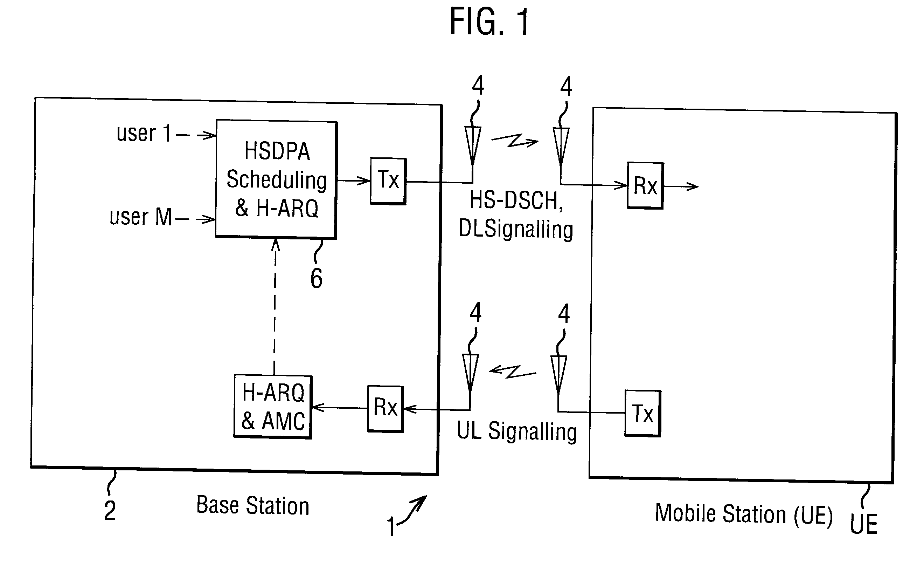

As shown in Figure 1, the preferred network 1 includes a base station 2 and many mobile stations UE communicating therewith ( one UE being shown in Figure 1 for simplicity). The base station 2 and mobile UE each have a transmitter Tx and a receiver Rx, each transmitter Tx and receiver Rx having a respective antenna 4. On the downlink, a High Speed-Downlink Shared Channel (HS-DSCH) is used, and on the uplink, a High Speed-Uplink Shared Channel (HS-USCH) is used.

A packet access scheme is proposed for both uplink and downlink high-speed packet transmission, which can meet the delay constraints of real-time audio/video streaming traffic. The scheme is based on the 3GPP HSDPA, and allows advantage to be taken of the time variation of the wireless channel characteristics by means of a suitable scheduling method controlling both the initial channel allocation and the H-ARQ mechanism.

High-speed transmission on the uplink shared channel requires signalling of timing information, in order to synchronize the transmissions from the different users. For both uplink and downlink, the scheduler 6 resides at the network (i.e. base station 2) side.

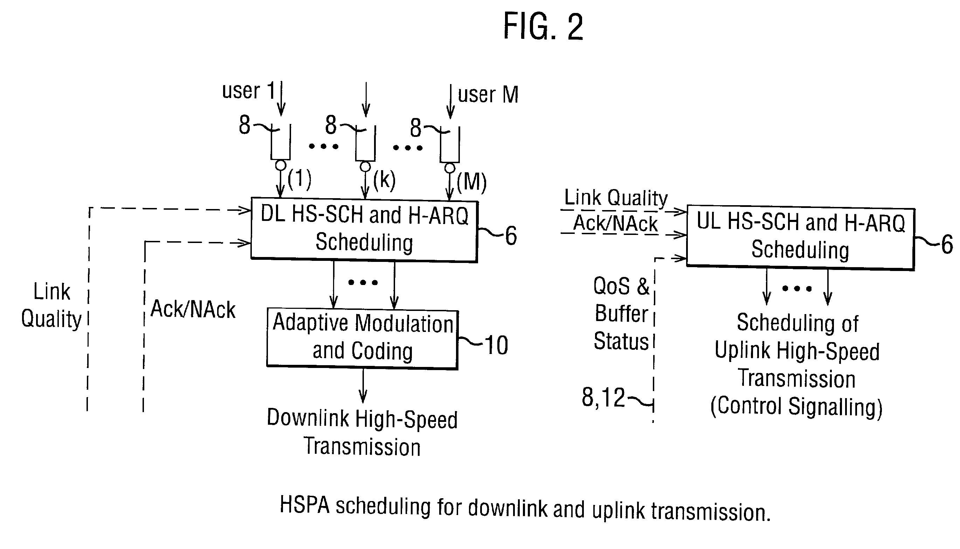

As shown in Figure 2, the joint high-speed packet access and H-ARQ scheduler 6 takes into account channel quality information and QoS requirements of the different user packet flows (8,user 1 to M) for both the first transmissions and the successive H-ARQ retransmissions. Its effectiveness relies on the flexibility of time and code multiplexing of user traffic over a common shared channel (downlink High Speed Shared Channel (DL HS-SCH), uplink High Speed Shared Channel (UL HS-SCH)) together with the availability of high peak data rates. The basic idea is that, under these conditions, the scheduler 6 transmits an audio/video frame within a short time interval *T*_{*0*}, corresponding to a fraction of the frame duration *T.* In this way, the remaining part ( *t+T*_{*0*}*, t+T*) of the frame interval can be used to schedule possible H-ARQ retransmissions, so that the frame can be successfully transmitted within the overall frame time *T*.

The packet scheduler 6 operates according to the same principle both for the first transmission and the possible successive retransmissions. The accumulated delay for each packet including the time spent for all the previous transmissions is monitored until such time as the packet is successfully transmitted as confirmed by a positive acknowledgement (Ack). The accumulated delay of each packet queued for transmission are taken in account by the scheduler 6 in its scheduling.

The above approach effectively provides errorless transmission of real-time traffic, enabling high-quality audio/video within the required delay constraints. The proposed scheme and resulting systems can support real-time, best-effort, and mixed real-time and best-effort traffic, on uplink, downlink, or both uplink and downlink.

For the downlink, adaptive modulation and coding AMC 10 is undertaken after scheduling. For the uplink, buffer status information of a user equipment (in other words how full its buffer of packets to be sent is) is taken into account in addition to other factors, such as quality of service expectations and accumulated delay, in scheduling by the scheduler 6. Uplink AMC is performed in the mobile terminal.

### Example Implementations

As an example of the operation of the proposed scheme, consider a Transmission Time Interval length of one 0.667msec timeslot, and assume available data rates between for example 1.2 Mbit/sec (assuming one transmit antenna, one receive antenna, QPSK modulation, and a code rate of 1 / 4) and 14.4 Mbit/sec (assuming four transmit antennas, four receive antennas, QPSK modulation, and a code rate of 3 / 4). In this situation, the high-speed packet access scheme provides the capability of transmitting from 800 to 9600 bits per transmission time interval in both uplink and downlink directions, depending on the channel conditions.

As a first example, in the case of the ITU G.723.1 voice codec as described in the paper: B. Li, M. Hamdi, D. Jiang, X.-R. Cao, and Y. T. Hou, "QoS-Enabled Voice Support in the Next Generation Internet: Issues, Existing Approaches and Challenges", IEEE Commun. Mag., April 2000, frames of 24 bytes are transmitted at intervals T = 30 msec, which corresponds to a bit rate of 6.4 kbit/sec. Each frame is conveyed over the Internet on the payload of an IP datagram including typically a header of 40 bytes in IP version 4 (12 bytes of RTP header, 8 bytes of UDP header, plus 20 bytes of IP header). Using the proposed scheme, the resulting 64 byte/frame = 512 bit/frame can always be carried by a single one-slot TTI (carrying from 800 to 9600 bits). Furthermore, the scheduler 6 has the flexibility of allocating the TTI transmission and the possible retransmissions within the time of 30 msec / 0.667 msec = 45 TTIs.

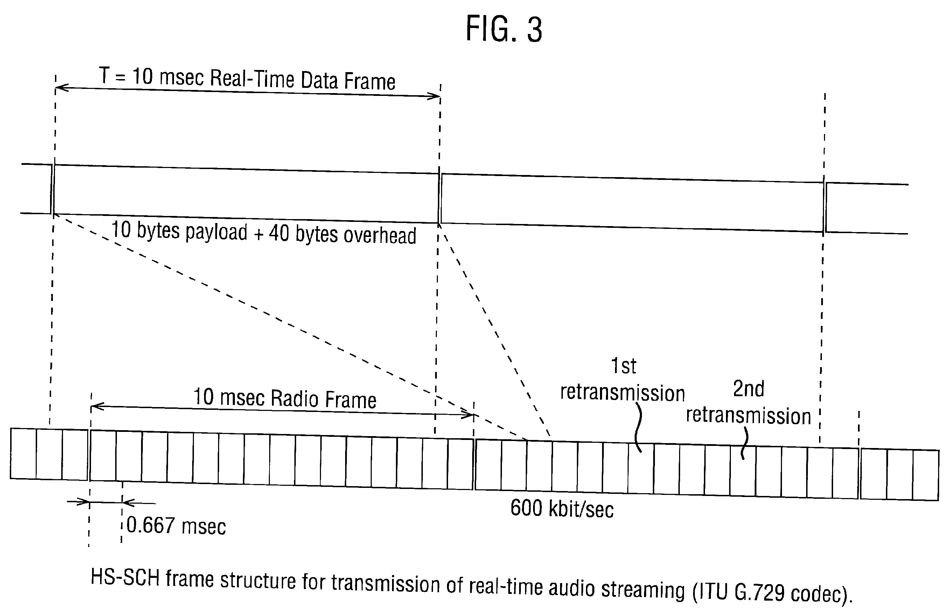

Similarly, as a second example shown in Figure 3, with the ITU G.729 voice codec, 10 byte/frame are transmitted with a frame length *T* = 10 msec, which gives a bit rate of 8 kbit/sec. Including again a 40 bytes header, the resulting IP datagram stream corresponds to 400 bit/frame, which, using the proposed scheme, can be always carried by a single-slot HSPA TTI. As shown in Figure 3, the scheduler 6 thus has in this case the flexibility of having 15 TTIs available for the transmission and possible retransmissions of one audio frame.

A third example is in the case of video streaming where the ITU H.261 video codec gives typical bit rates of 64 to 384 kbit/sec, while the H.263 video codec typically results in 16 to 128 kbit/sec. For these codecs, one has frame repetition intervals of 100 to 200 msec (5 to 10 frame/sec) for low bit rates (e.g., 16 to 64 kbit/sec), and 33 to 66 msec (15 to 30 frame/sec) respectively for higher bit rates. This gives an average of about 100 to 1600 bytes per IP datagram (including a 40 bytes overhead). Using the proposed scheme, the corresponding 800 to 12800 bit/frame can be carried over one or sometimes necessarily more TTI. It is worth noting that higher number of bits per frame tend to occur where there are longer frame durations, which allows enough time to schedule multiple TTI transmissions including retransmissions where appropriate.

A signalling methodology which supports the proposed scheme is based on the use of dedicated control channels for both uplink and downlink signalling. Alternatively, the signalling methodology can be implemented using uplink and downlink shared control channels.

## Claims

1. A method of scheduling data packets for transmission from a first terminal to a second terminal over a channel shared with other terminals comprising monitoring the time interval from accepting a packet for transmission, scheduling the packet for transmission and if the transmission is unsuccessful rescheduling the packet for retransmission within a predetermined time, the predetermined time being selected dependent upon the magnitude of the time interval.

2. A method of scheduling data packets for transmission according to claim 1, in which the transmission is not considered successful and the time interval for the packet is monitored until a positive acknowledgement from the second terminal is received.

3. A method of scheduling data packets for transmission according to claim 1 or claim 2, in which the larger the measured time interval the sooner the scheduled retransmission.

4. A method of scheduling data packets for transmission according to any preceding claim, in which the scheduling ensures most or substantially all packets with delay constraint requirements are successfully transmitted within a respective time interval which is within the time duration of one frame.

5. A method of scheduling data packets for transmission according to any preceding claim, in which quality of service (QoS) requirements and/or channel quality are also taken into account in scheduling the first transmission and possible subsequent retransmission(s).

6. A method of scheduling transmissions of data packets in both directions between a base station and a user equipment comprising using
the method of scheduling according to any of claims 1 to 5 for downlink packet transmissions in which the first terminal is a base station and the second terminal is a user terminal, and
the method of scheduling according to any of claims 1 to 5 for uplink packet transmissions in which the first terminal is a user terminal and the second terminal is a base station.

7. A terminal of a data packet transmission network, the terminal comprising a scheduler operative to schedule data packets for transmission over a channel shared with other terminals, the scheduler comprising a timer operative to monitor a time interval from accepting a packet for transmission, the scheduler being operative to schedule the packet for transmission and if the transmission is unsuccessful rescheduling the packet for retransmission within a predetermined time, the predetermined time being selected dependent upon the time interval.

8. A terminal of a data packet transmission network according to claim 7, in which the terminal is a base station and the scheduler operates such that the transmission is not considered successful until a positive acknowledgement is received by the base station.

9. A terminal of a data packet transmission network according to claim 7 or claim 8, in which the terminal is a base station and the base station is operative to schedule uplink packet transmissions, the scheduling being dependent also on received information of the amount of data packets queued in a user terminal for transmission.

10. A terminal of a data packet transmission network according to any of claims 7 to 9, in which the terminal is operative to schedule packet transmissions uplink or downlink or both uplink and downlink.
